Europäisches Patentamt

European Patent Office

Office européen des brevets

(11) Veröffentlichungsnummer: **0 318 745**

**A2**

## (12) EUROPÄISCHE PATENTANMELDUNG

(21) Anmeldenummer: 88118896.5

(51) Int. Cl.⁴: **H02G 1/08**

(22) Anmeldetag: **12.11.88**

(30) Priorität: 30.11.87 DE 3740523
05.05.88 DE 8805963 U
30.05.88 DE 3818328

(43) Veröffentlichungstag der Anmeldung:
**07.06.89 Patentblatt 89/23**

(84) Benannte Vertragsstaaten:
**AT BE CH DE ES FR GB GR IT LI LU NL SE**

(71) Anmelder: **HEINS MASCHINENBAU GMBH & CO. KG**
**Wiesenstrasse 16**
**D-2722 Visselhövede(DE)**

(72) Erfinder: **Otto, Dieter**
**Am Bramberg 17**
**D-2061 Seth(DE)**
Erfinder: **Postels, Johann**
**Kurze Strasse 3**
**D-2733 Kirchtimke(DE)**
Erfinder: **Luyten, Joseph Maria**
**Buchenstrasse 5d**
**D-2730 Zeven(DE)**

(74) Vertreter: **Meinecke, Günther, Dipl.-Phys.**
**An der Bürsteler Heide 19**
**D-2805 Stuhr 1(DE)**

(54) **Verfahren und Vorrichtung zum Verlegen von Kabeln in vorverlegten Rohrleitungen.**

(57) Die Erfindung betrifft ein Verfahren zur Verlegung von Kabeln in vorverlegten Rohrleitungen und eine Vorrichtung zur Ausübung des Verfahrens. Kennzeichnend ist, daß das Kabel durch eine entsprechende Vorrichtung in die Rohrleitung eingeschoben wird und gleichzeitig ein unter Druck stehendes Fluid in die Rohrleitung eingeleitet wird, das den Kabeltransport in der Rohrleitung durch Oberflächenreibung am Kabel und Verminderung der Reibung des Kabels an der Rohrwand fördert. Eine weitere Verbesserung ist erreichbar, wenn das Kabel an einen durch das Fluid durch die Rohrleitung gepreßten Zugstopfen angekoppelt ist und so durch Zug- und Druckwirkung in die Rohrleitung eingebracht wird. Es ist möglich, auf diese Weise Kabel von über 1500m Länge in Rohrleitungen mit Krümmungen in horizontaler und vertikaler Richtung einzuführen, ohne daß die Gefahr von Leitungsbrüchen im Kabel auftritt.

Figur 1

## Verfahren und Vorrichtung zum Verlegen von Kabeln in vorverlegten Rohrleitungen

Die Erfindung betrifft ein Verfahren und eine Vorrichtung zum Verlegen von Kabeln, insbesondere von Kabeln der Nachrichtentechnik, in vorverlegten Rohrleitungen. Das Verfahren und die Vorrichtung sind insbesondere zur Verlegung von Glasfaserkabeln, die hinsichtlich der bei den bisher üblichen Verfahren der Verlegetechnik auftretenden Zugspannungen besonders anfällig sind, geeignet.

Bei den bisher üblichen Verfahren zur Verlegung von Kabeln in vorverlegten Rohrleitungen werden zuerst Zugseile, gegebenenfalls sogar Hilfszugseile in die Rohrleitungen eingebracht und damit die Kabel anschliessend eingezogen. Durch die Reibung der Seile und der Kabel an den Rohrwänden sind teilweise erhebliche Zugkräfte aufzubringen, insbesondere dann, wenn auch noch Krümmungen in den Leitungswegen vorkommen.

Entsprechend hoch sind dann natürlich auch die auf die Kabel ausgeübten Zugspannungen, so daß aus diesem Grunde nur beschränkte Kabellängen zu verwenden sind, wobei zusätzlich zum Schutz der empfindlichen Nachrichtenleitungen Kabelbewehrungen vorzusehen sind, die die Kabelgewichte erheblich vergrößern.

In der deutschen Patentschrift 3 220 286 ist deswegen schon vorgeschlagen worden, die Kabel mit Hilfe von am Kabel angebrachten Zugstopfen die mit Druckluft beaufschlagt werden, in die Rohrleitungen einzuziehen. Dabei können nach Erreichen einer Maximallänge, die durch die auftreten den Zugspannugen bestimmt werden, gegenenfalls weitere Zugstopfen auf das Kabel aufgebracht werden, um größere durchgehende Kabelstränge in die Rohrleitugen einbringen zu können.

Zweifellos kann dieses Verfahren das Einbringen von Hilfs- und/oder Zugseilen ersparen und eventuell auch die Möglichkeit schaffen, mehrere "Maximallängen", die durch die auch hier unvermeidbaren Zugspannungen vorgegeben sind, ohne eine Kabeitrennung einzubringen, aber die unangenehmen und gefährlichen Zugspannungen, die zu Leitungsbrüchen führen können, wer — den auch mit diesem Verfahren nicht vermieden.

Ferner ist in der britischen Patentanmeldung 2 190 457 A der Vorschlag gemacht worden, Kabel in einer Flüssigkeit schwimmend in vorverlegte Rohrleitungen einzubringen, wozu die Forderung erhoben wird, die Kabel so auszulegen, daß ihre Dichte möglichst der Dichte der zu verwendenden Flüssigkeit entspricht. Das Kabel soll dabei am Beginn der Rohrleitung durch eine entsprechende Vorrichtung in das Rohr hineingeschben werden. Allerdings wird in dieser Schrift auch darauf hingewiesen, daß die Rohrleitungen, in die das Kabel einzubringen ist, möglichst geradlinig verlaufen müssen und keine Steigungen aufweisen dürfen. Das ist auch verständlich, wenn die Kabel im Grunde in eine solche Rohrleitung "eingeschwemmt" werden sollen.

Die Aufgabe der vorliegenden Erfindung ist es daher, ein Verfahren anzugeben, bei dem die Gefahr von Leitungsbrüchen in den Nachrichtenkabeln beim Verlegen praktisch ausgeschlossen sind, aber die Einschränkungen, die nach der britischen Schrift eine Anwendung nur in Ausnahmefällen ermöglichen, ebenfalls keine rolle spielen. Diese Aufgabe wird mit den in den Ansprüchen angegebenen Verfahrensschritten unter Verwendung einer Vorrichtung, wie sie ebenfalls in den Ansprüchen beschrieben ist, erfüllt.

Der Grundgedanke der Erfindung ist darin zu sehen, daß das in einer vorverlegten Rohrleitung zu verlegende Kabel durch eine Vorschubeinrichtung, die das Kabel von einer Vorratstrommel abzieht, in die Rohrleitung eingeschoben wird und daß gleichzeitig ein unter Druck stehendes Fluid zusammen mit dem Kabel in die Rohrleitung eingebracht wird, das einerseits durch Reibung an der Kabeloberfläche eine Zugwirkung auf das Kabel ausübt und andererseits die Reibung zwischen Kabel und Rohrinnenwand erheblich vermindert. Die Zugwirkung des Fluids wird mit zunehmender Kabellänge immer größer und kann schließlich die Schubwirkung der Vorschubeinrichtung übertreffen, wobei aber diese Zugwirkung auf die ganze Kabellänge verteilt einwirkt, so daß keine unzulässigen Zugspannungen auftreten können, die zu Leitungsbrüchen führen könnten. Diese Wirkung ist auch dann gegeben, wenn die Rohrleitung Krümmungen oder Steigungen aufweist.

Dadurch, daß durch das erfindungsgemäße Verfahren gewährleistet ist, daß keine größeren Zugspannungen auftreten können, ist es auch möglich, die Bewehrung des Kabels erheblich geringer als sonst notwendig auszubilden, was zu einer Verringerung des Kabelgewichtes beiträgt mit dem Vorteil, daß dadurch sowohl das Einschieben des Kabels erleichtert wird als auch die durch Reibung erzielte Zugwirkung auf das Kabel durch das an ihm entlangströmende Fluid vergrößert wird.

Versuche haben ergeben, daß bei Anwendung des erfindungsgemäßen Verfahrens wesentlich größere Kabellängen in vorverlegte Rohrleitungen eingebracht werden können als mit den bekannten Verfahren, bei denen durch reine Anwendung von Zugkräften die Kabel verlegt werden. Ferner hat sich dabei herausgestellt, daß auch die Gefahr von Stauchungen des Kabels wesentlich kleiner ist als zunächst vermutet werden mußte. Es war möglich, Kabellängen von 1000 Metern ohne irgendwelche Störungen zu verlegen.

Eine weitere Verbesserung ist zu erzielen, wenn man auf das freie Ausströmen des Fluids an der offenen Seite der Rohrleitung verzichtet und zu einer Kombination des neuen Verfahrens mit einer Variante des be kannten Ziehverfahrens übergeht. Dabei werden allerdings keine Zugseile verwandt, sondern durch Einführung eines mit dem Kabelanfang beispielsweise durch einen Ziehstrumpf verbundenen Zugstopfens, der durch das unter Druck stehende Fluid durch die Rohrleitung gedrückt wird, eine Zugkraft auf den Kabelanfang ausgeübt, deren Größe leicht durch den auf das Fluid ausgeübten Druck regelbar ist. Durch diese Kombination von Zug- und Druckkräften, bei der die Zuggeschwindigkeit des Zugstopfens und die Einschubgeschwindigkeit der Vorschubeinrichtung aufeinander abgestimmt werden können, ließen sich Kabellängen von 1500m Länge in Rohrleitungen mit Krümmungen in horizontaler und vertikaler Richtung ohne Schwierigkeiten einbringen. Als Vorteil hat es sich dabei herausgestellt, wenn vor dem Zugstopfen eine geringe Menge eines Mittels zur Verringerung der Oberflächenspannungen, wie beispielsweise eines der bekannten "Geschirrspülmittel", in die Rohrleitung eingebracht wird. Dieses Mittel benetzt mit Hilfe des Zugstopfens nach und nach die gesamte innere Oberfläche der Rohrleitung, sorgt dabei für eine besonders gute Abdichtung zwischen Rohrleitung und Zugstopfen und verbessert die Gleitfähigkeit des Zugstopfens und des in die Rohrleitung einzubringenden Kabels.

Im folgenden Teil ist eine Vorrichtung zur Durchführung des erfindungsgemäßen Verfahrens beschrieben, die nur als Beispiel dienen soll.

In den beigefügten Zeichnungen stellen dar:

Figur 1 schematisch eine Gesamtansicht einer Vorrichtung zur Durchführung des erfindungsgemäßen Verfahrens,

Figur 2 einen Schnitt durch die Vorschubeinrichtung nach der Schnittlinie A - A der Figur 1,

Figur 3 die Antriebsvorrichtung der Vorschubeinrichtung mit ihren Transportrollen und abhebbaren Andruckrollen

Figur 4 einen Schnitt durch die (teilbare) Muffe, die die Verbindung zwischen der Vorschubeinrichtung und der Rohrleitung herstellt,

Figur 5 im Detail die Muffe, die die Verbindung zwischen der Vorschubeinrichtung und der (vorverlegten) Rohrleitung herstellt, und den in die Rohrleitung eingeführten Zugstopfen und

Figur 6 den Zugstopfen.

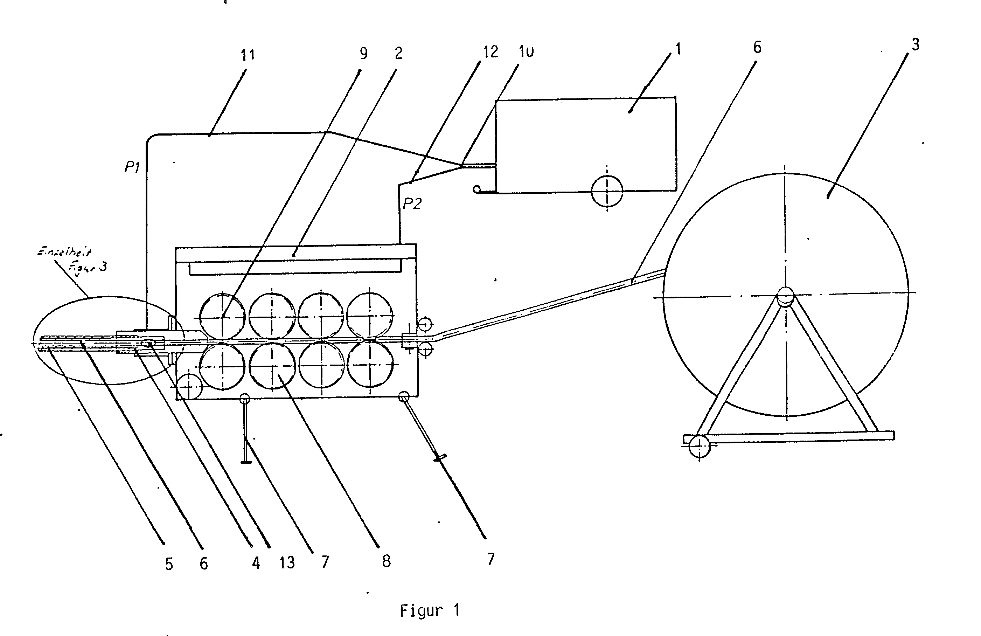

In der Figur 1 ist der Druckgenerator 1, beispielsweise ein Kompressor, über den Druckverteiler 10 und die Druckleitungen 11 und 12 mit dem Anschluß 13 der Muffe 4 einerseits und dem (pneumatischen oder hydraulischen) Motor 21 andererseits verbunden. Das von dem Druckgenerator beaufschlagte Fluid wird zum größeren Teil über die Druckleitung 11 und die Muffe 4 in die Rohrleitung 5 gedrückt und treibt zum kleineren Teil über die Druckleitung 12 den Motor 21 in der Vorschubeinrichtung 2 an. Die mittels der versellbaren Beine 7 ausrichtbare Vorschubeinrichtung 2 ist fluchtend mit der Rohrleitung 5 ausgerichtet und mit dieser durch die Muffe 4 verbunden.

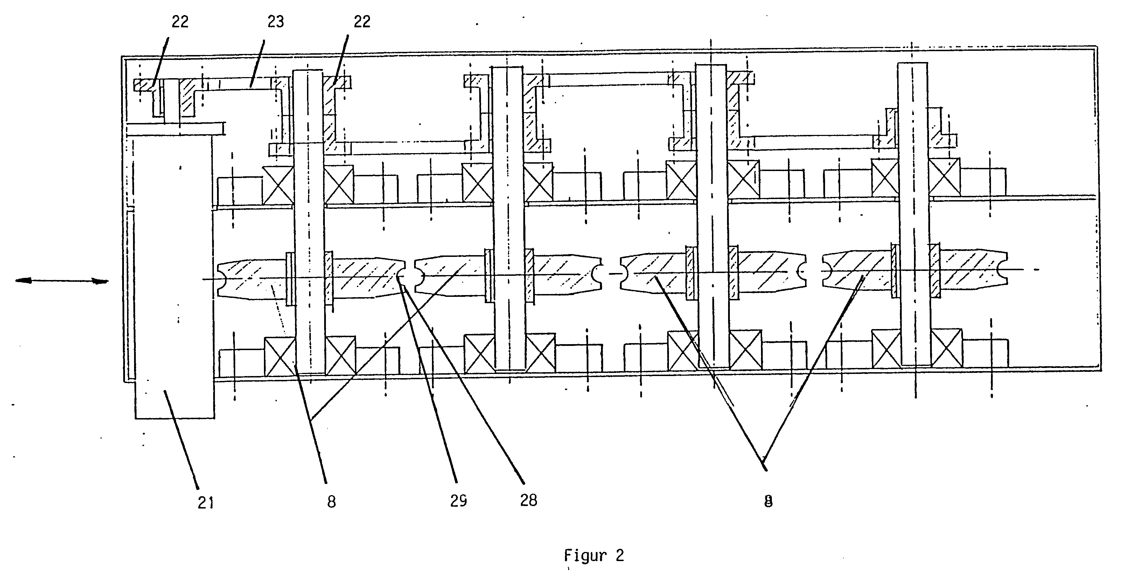

Das auf der Vorratstrommel 3 gelagerte Kabel 6 ist von der Trommel zur Vorschubeinrichtung 2 geführt und läuft im Innern der Vorschubeinrichtung 2 über Transportrollen 8, die von dem in Figur 2 dargestellten Motor 21 antreibbar sind und indetem auf dem Umfang 28 angeordneten Vertiefungen 29 das Kabel 6 durch Andruckrollen 9 eingepreßt ist, zur Muffe 4, durch die das Kabel 6 zentral in die Rohrleitung 5 geführt ist. Bereits im Innern der Muffe 4 wird Kabel 6 von dem durch die Druckleitung 11 zugeführten unter Druck sehendem Fluid umspült.

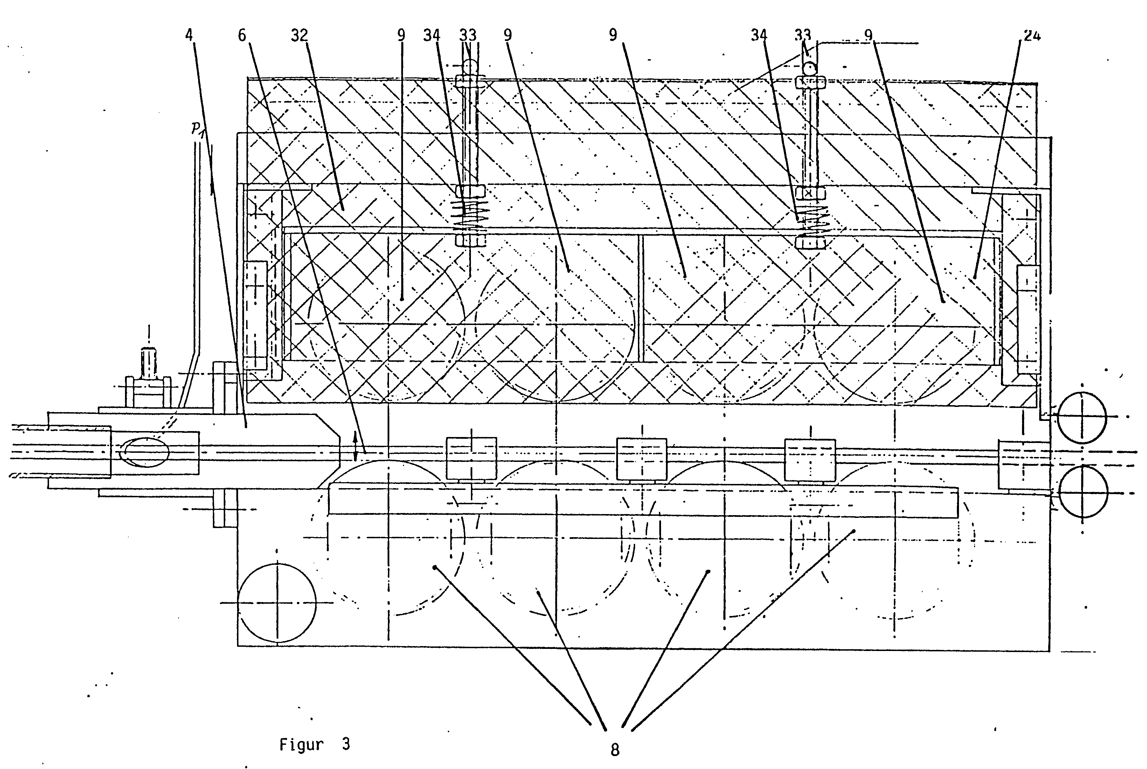

Die Figur 2 zeigt nach dem Schnitt A - A der Figur 1 die Anordnung des Motors 21 in der Vorschubeinrichtung2, der über Zahnräder 22 und Ketten 23 die Transportrollen 8 gleichmäßig antreibt, wobei dadurch, daß das Kabel 6 durch die in der Figur 3 näher dargestellten Andruckrollen 9 in die auf dem Umfang 28 der Transportrollen 8 angeordneten Vertiefungen 29 reibungsschlüs sig eingedrückt wird, ein gleichmäßiger Vorschub des Kabels 6 durch die Muffe 4 hindurch in die Rohrleitung 5 erfolgt.

Wie aus der Figur 3 zu sehen ist, sind die Andruckrollen 9 gemeinsam in einem Rahmen 32 gehalten, der durch Schubstangen 33 in Richtung auf die Transportrollen 8 zu verschiebbar ist. Druckfedern 34 sorgen für den erforderlichen Anpreßdruck auch bei Unregelmäßigkeiten des Kabels 6.

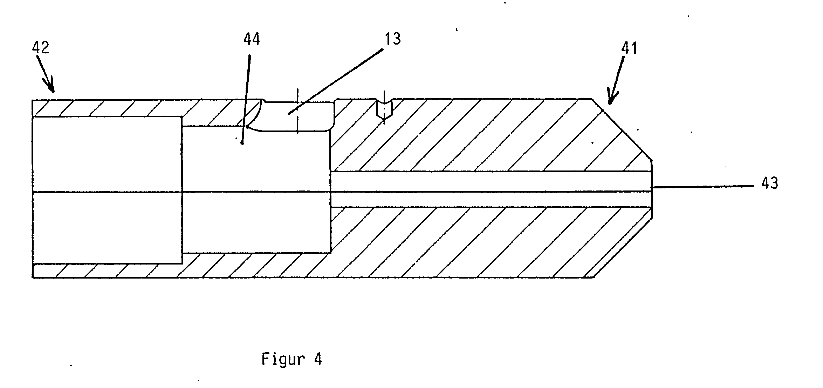

Die Figur 4 zeigt eine Halbschale der Muffe 4 in der Ansicht. Das Ende 41 der Muffe 4 ist in eine Aufnahme der Vorschubeinrichtung 2, das andere Ende 42 in die Rohrleitung 5 einführbar. Das Kabel 6 (hier nicht gezeichnet) wird durch die Bohrung 43, deren Durchmesser nur geringfügig größer als der jeweilige Kabeldurchmesser ist, eingeführt bzw. eingelegt, da die Muffe 4 in der Zeichnungsebene teilbar ist, wobei der zweite Muffenteil dem dargestellten spiegelbildlich gleicht. An den Anschluß 13 ist die (nicht dargestellte) Druckleitung 11 angeschlossen. Im Anschluß an die Bohrung 43 ist der bereits oben erwähnte ringförmige Kanal 44 angeordnet, der für eine gleichmäßige Umströmung des Kabels 6 durch das zugeführte Fluid sorgt.

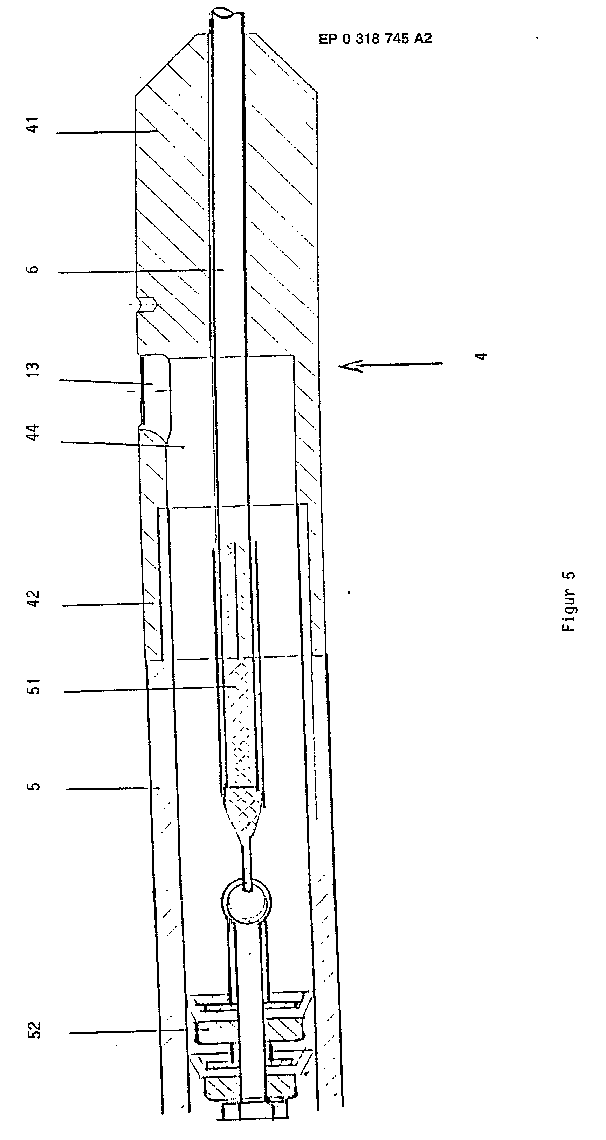

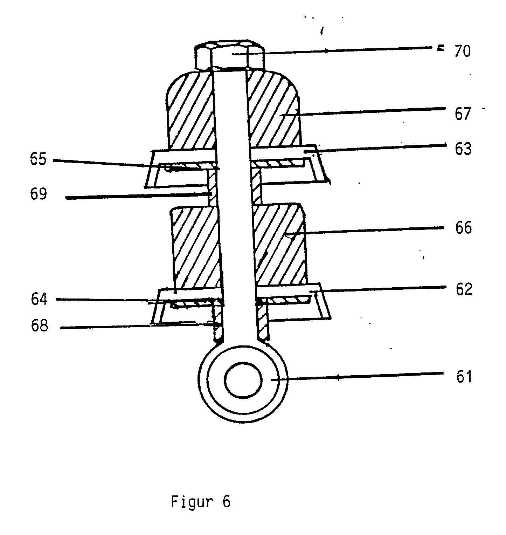

In der Figur 5 ist wiederum die Muffe 4 gezeigt mit dem Anschluß an die Rohrleitung 55, über deren Ende die Muffe 4 mit ihrem Ende 42 greift. Das andere Ende 41 für den Anschluß an die Vorschubeinrichtung 2 führt in ihrer Bohrung 43 druckdicht das Kabel 6, das von dem ringförmigen Kanal 44 an von dem durch die (nicht gezeichnete) Druckleitung 11 über den Anschluß 13 zugeführten Fluid umspült ist. das vordere Ende des Kabels 6 ist von dem Ziehstrumpf 51 kraftschlüssig umschlossen, der andererseits mit dem Zugstopfen 52 verbunden ist. Der Zugstopfen 52, auf den das druckbeaufschlagte Fluid einwirkt, wird durch dieses in die Rohrleitung 5 hineingedrückt und zieht damit das Kabel 6 in die Rohrleitung 5 hinein, das gleichzeitig durch die Vorschubeinrichtung 2 geschoben wird.

In der Figure 6 ist der Zugstopfen 52 im Detail gezeigt. Er besteht aus der Augenschraube 61, deren Schaft die Achse des Zugstopfens bildet. Auf den Schraubenschaft sind die beiden Gummimanschetten 62 und 63 aufgeschoben, deren elastische Ränder druckdicht an der Innenwand der Rohrleitung 5 anliegen. Die Gummimanschetten 62,63 stützen sich einerseits auf die Unterleg scheiben 64 und 65. andererseits aufdie Kunststoffstopfen 66 und 67 ab. Zur Abstimmung des Abstandes der beiden Gummimanschetten voneinander sind kurze Hydraulikrohrstücke 68 und 69 vorgesehen. Durch eine Mutter 70 sind die Teile des Zugstopfens zusammengehalten. Das Auge der Augenschraube 61 dient zum Einhängen eines mit dem (nicht dargestellten) Ziehstrumpf (51) verbundenen Hakens als Zugorgan.

Ein besonderes Merkmal des Zugstopfens 52 ist in der konischen Ausbildung der Lippenränder der Gummimanschetten 62,63 zu sehen. Diese Lippenränder weisen eine nur geringe Berührungsfläche mit der Rohrleitungsinnenwand und damit nur eine sehr geringe Reibung auf, ohne daß darunter etwa ihre Wirksamkeit leiden würde.

**Ansprüche**

1.) Verfahren zum Verlegen von Kabeln in vorverlegten Rohrleitungen unter Verwendung eines (gas-oder flüssigförmigen) Fluides, das unter Druck zusammen mit dem zu verlegenden Kabel in die Rohrleitung eingebracht wird, dadurch gekennzeichnet, daß ·
das zu verlegende Kabel mittels einer Vorschubeinrichtung in das vorverlegte Rohr eingeschoben und durch Schub bis zu einer im Rohrleitungsverlauf vorgesehenen End- oder Zwischenstelle transportiert wird und daß an der Einführungsstelle in die Rohrleitung für das Kabel unter Druck ein Fluid zusammen mit dem Kabel in die Rohrleitung eingebracht wird, das frei an dem Kabel entlang in Richtung auf die End- oder Zwischenstelle zu strömen kann, wobei es einerseits durch Reibung am Kabel zum Transport des Kabels durch die Rohrleitung beiträgt und andererseits die Reibung des Kabels an den Rohrwänden zumindest erheblich vermindert.

2.) Verfahren nach Anspruch 1, dadurch gekennzeichnet, daß zur Einführung des Kabels in die Rohrleitung eine teilbare, sowohl mit dem Rohrleitungsende als auch mit der Vorschubeinrichtung kuppelbare Muffe verwendet wird, die einen Anschlußstutzen für die Zuführung des Fluids aufweist.

3.) Verfahren nach Anspruch 1 und/oder 2, dadurch gekennzeichnet, daß als Fluid ein Gas, beispielsweise Druckluft verwendet wird.

4.) Verfahren nach Anspruch 1 und/oder 2, dadurch gekennzeichnet, daß als Fluid eine Flüssigkeit, beispielsweise Wasser, verwendet wird.

5.) Verfahren nach mindestens einem der Ansprüche 1 bis 4, dadurch gekennzeichnet, daß das Fluid durch einen Druckerzeuger mit einem Druck von bis zu etwa 10 Bar beaufschlagt wird.

6.) Verfahren nach mindestens einem der Ansprüche 1 bis 5, dadurch gekennzeichnet, daß ein Teil des druckbeaufschlagten Fluids zum Antrieb eines Fluidmotors verwendet wird, der die Vorschubeinrichtung für das zu verlegende Kabel antreibt.

7.) Verfahren nach einem der Ansprüche 1 bis 6, dadurch gekennzeichnet, daß das zu verlegende Kabel an einem in die Rohrleitung eingeführten Zugstopfen beispielsweise mittels eines Ziehstrumpfes befestigt wird und daß das Kabel durch die Vorschubeinrichtung sowohl in die Rohrleitung eingeschoben als auch durch den zugstopfen unter der Wirkung des in die Rohrleitung unter Druck eingeleiteten Fluids in die Rohrleitung hineingezogen wird.

8.) Verfahren nach Anspruch 7, dadurch gekennzeichnet, adß durch Regelung des Druckes, unter dessen Wirkung das Fluid in die Rohrleitung eingeführt wird, die Zuggeschwindigkeit des Zugstopfens und die Einschubgeschwindigkeit der Vorschubeinrichtung aufeinander abgestimmt werden.

9.) Verfahren nach Anspruch 7 und/oder 8, dadurch gekennzeichnet, daß durch geeignete Wahl des Kabeldurchmessers einerseits und des Rohrdurchmessers andererseits unter Einwirkung der Oberflächenrauhigkeiten eine turbulente Strömung des Fluids erzwungen wird, um den Reibungswiderstand des Kabels in der Rohrleitung zu minimieren.

10.) Verfahren nach mindestens einem der Ansprüche 7 bis 9, dadurch gekennzeichnet, daß durch eine Meßvorrichtung die Zugspannung am Kabelanfang gemassen wird, die aus dieser Zugspannung resultierende Zuggeschwindigkeit errechnet und als Regelgröße an die Vorschubeinrinrichtung und/oder den Druckerzeuger weitergeleitet wird.

11.) Verfahren nach mindestens einem der Ansprüche 7 bis 10, dadurch gekennzeichnet daß ein gegebenenfalls steuerbares Entlastungsventil in dem Zugstopfen vorgesehen ist, das zur Vermeidung von Spannungsspitzen eine Verminderung des auf den Zugstopfen einwirkenden Drucks und damit der vom Zugstopfen auf das Kabel einwirkenden Zugspannung ermöglicht.

12.) Verfahren nach mindestens einem der Ansprüche 7 bis 11, dadurch gekennzeichnet, daß ein Zugstopfen mit mindestens zwei auf der gleichen Achse hintereinander in kurzem Abstand voneinander angeordneten Manschetten verwendet wird.

13.) Verfahren nach mindestens einem der Ansprüche 1 bis 13, dadurch gekennzeichnet, daß vor dem Einbringen des zu verlegenden Kabels oder dse Zugstopfens in die Rohrleitung eine (von der Rohrleitungslänge abhängige) Menge eines die Oberfächenspannung vermindernden Mittels, wie beispielsweise eines der bekannten Geschirrspülmittels, in die Rohrleitung eingebracht wird.

14.) Vorrichtung zur Ausübung des Verfahrens nach mindestens einem der Ansprüche 1 bis 13, dadurch gekennzeichnet, daß sie aus

a) einem Druckgenerator (1)

b) einer Vorschubeinrichtung (2) für ein in einer vorverlegten Rohrleitung (5) zu verlegendes Kabel (6), das auf einer Vorratstrommel (3) aufgewickelt und in die Vorschubeinrichtung (2) einführbar ist und

c) einer sowohl mit der Vorschubeinrichtung (2) als auch mit der Rohrleitung (5) kuppelbaren Muffe (4), die außerdem einen Anschluß (13) für eine druckdichte Verbindung (11) mit dem Druckgenerator (1) aufweist, besteht.

15.) Vorrichtung nach Anspruch 14, dadurch gekennzeichnet, daß der Druckgenerator (1) ein Druckluftgenerator ist.

16.) Vorrichtung nach Anspruch 14, dadurch gekennzeichnet, daß der Druckgenerator (1) eine Vorrichtung zur Erzeugung hydraulischen Drucks ist.

17.) Vorrichtung nach Anspruch 15 oder 16, dadurch gekennzeichnet, daß ein kleinerer Anteil von etwa bis zu zehn Prozent des von dem Druckgenerator (1) beaufschlagten Fluids einem in der Vorschubeinrichtung (2) angeordnetem Motor (21), der größere Anteil über die Druckleitung (11) dem an der Muffe (4) vorgesehenen Anschluß (13) zugeführt ist.

18.) Vorrichtung nach mindestens einem der Ansprüche 14 bis 17, dadurch gekennzeichnet, daß die Vorschubeinrichtung (2) mehrere Transport- (8) und Andruckrollen (9) aufweist, zwischen die das zu verlegende Kabel (6) reibungsschlüssig einlegbar ist, wobei die Transportrollen (8) gemeinsam von dem in der Vorschubeinrichtung angeordneten Motor antreibbar sid.

19.) Vorrichtung nach einem der Ansprüche 14 bis 18, dadurch gekennzeichnet, daß die zur Verbindung der Vorschubeinrichtung (2) mit der Rohrleitung (5) vorgesehene Muffe (4) aus mindestens zwei miteinander kuppelbaren Teilen besteht.

20.) Vorrichtung nach mindestens einem der Ansprüche 14 bis 19, dadurch gekannzeichnet, daß ein vor dem Kabel (6) in die Rohrleitung (5) einführbarer und in an sich bekannter Weise mit dem Kabel (6) kuppelbarer Zugstopfen (52) vorgesehen ist, der unter dem Druck des in die Rohrleitung (5) eingeführten Fluids durch die Rohrleitung hindurchtreibbar ist.

21.) Vorrichtung nach Anspruch 20, dadurch gekennzeichnet, daß der Zugstopfen (52) mindestens zwei auf einer Achse (61) angeordnete Gummimanschetten (62,63) aufweist mit vorzugsweise konisch ausgebildeten Lippenrändern.

22.) Vorrichtung nach einem der Ansprüche 20 und/oder 21, dadurch gekennzeichnet, daß der Zugstopfen mit Druck- und /oder Zugspannungsmeßgeräten ausgerüstet ist.

23.) Vorrichtung nach mindestens einem der Ansprüche 20 bis 22, dadurch gekennzeichnet, daß der Zugstopfen mit mindestens einem Überdruckventil ausgerüstet ist.

24.) Vorrichtung nach mindestens einem der Ansprüche 20 bis 23, dadurch ge kennzeichnet, daß der Zugstopfen (52) mit steuerbaren Ventilen ausgerüstet ist.

11 9 2 12 1U 1 6 3

P1

P2

Einzelheit
Figur 3

5 6 4 13 7 8 7

Figur 1

EP 0 318 745 A2

Figur 2

EP 0 318 745 A2

Figur 3

42          44        13                    41

Figur 4

43

EP 0 318 745 A2

52   5   51   42   44   13   6   41

4

EP 0 318 745 A2

Figur 5

Figur 6